# EUROPÄISCHE PATENTANMELDUNG

(11) **EP 3 188 197 A1**
(43) Veröffentlichungstag der Anmeldung: **05.07.2017**
(21) Anmeldenummer: 16204560.3
(22) Anmeldetag: 16.12.2016
(51) Int. Cl.: H01C 7/102, H01C 7/12, H01H 85/44, H02H 3/20, H02H 9/04

(54) **ÜBERSPANNUNGSSCHUTZGERÄT VOM TYP II**

(30) Priorität: 16.12.2015 DE 102015225376
(71) Anmelder: PHOENIX CONTACT GmbH & Co. KG, 32825 Blomberg (DE)
(72) Erfinder: Durth, Rainer, 32805 Horn-Bad Meinberg (DE)
(74) Vertreter: Schmelcher, Thilo

(57) **Zusammenfassung**

Die Erfindung betrifft eine Überspannungsschutzgerät (1) vom Typ II, aufweisend einen Varistor (VAR) und ein Schutzelement (F), wobei das Schutzelement (F) einen ersten Anschluss (FA1) zur Verbindung mit einem ersten Potential (L) eines Versorgungsnetzes aufweist und einen zweiten Anschluss (FA2), der mit einem ersten Anschluss (VARA1) des Varistors (VAR) verbunden ist, aufweist, wobei der Varistor (VAR) weiterhin einen zweiten Anschluss (VARA2) zur Verbindung mit einem zweiten Potential (N) eines Versorgungsnetzes aufweist, wobei das Schutzelement (F) einen Schmelzleiter (D) aufweist, der den ersten Anschluss (FA1) und den zweiten Anschluss (FA2) des Schutzelements (F) verbindet, wobei das Schutzelement (F) weiterhin einen dritten Anschluss (FA3) aufweist, der mit dem zweiten Anschluss (VARA2) des Varistors (VAR) verbunden ist und der benachbart, aber elektrisch isoliert, zum Schmelzleiter (D) angeordnet ist, wobei der Schmelzleiter (D) im Bereich des benachbarten Anschlusses (VARA3) eine Engstelle (E) aufweist, wobei die Engstelle so ausgestaltet ist, dass der Schmelzleiter (D) im Bereich der Engstelle (E) ein elektrisch leitendes Schmelzmittel (SM) aufweist, wobei das Schmelzmittel (SM) einen geringeren Erweichungspunkt als der Schmelzleiter (D) selbst aufweist, sodass Impulse, die einer Belastung unterhalb der Auslegung als Typ II entsprechen, nicht zu einer nachhaltigen Veränderung der Engstelle (E) führen, wobei die Engstelle (E) in Verbindung mit dem Schmelzmittel (SM) so dimensioniert ist, dass Impulse, die einer Belastung im Grenzbereich der Auslegung als Typ II entsprechen, zu einem Eindiffundieren des Schmelzmittels (SM) in den Schmelzleiter (D) führen, wobei Impulse, die einer Belastung stärker und/oder langanhaltender als der Auslegung als Typ II des Varistors (VAR) entsprechen, zu einem unmittelbaren Abtrennen des Schmelzleiters (D) führen.

## Beschreibung

### Hintergrund

Es ist bekannt, dass Überspannungen an Geräten eine Vielzahl von Ursachen haben können.

Der mit dem jeweiligen Überspannungsereignis einhergehende Energieinhalt ist sehr unterschiedlich. Allerdings ist in aller Regel davon auszugehen, dass Überspannungsereignisse mit hohen Energieinhalten seltener sind als Überspannungsereignisse mit niedrigen Energieinhalten.

Beispielsweise treten Überspannungsereignisse mit niedrigen Energieinhalten, wie z.B. Überspannungen in Folge von Schalthandlungen, deutlich häufiger auf, als Überspannungsereignisse mit hohen Energieinhalten, wie z.B. direkte oder indirekte Blitzeinwirkungen.

Um diese Überspannungsereignisse gefahrloser zu machen, wurden Überspannungsschutzgeräte entwickelt, die die jeweiligen Überspannungen ableiten sollen.

Allerdings ist mit der Leistungsfähigkeit der Überspannungsschutzgeräte auch ein entsprechender Materialeinsatz verbunden, so dass besonders leistungsfähige Überspannungsschutzgeräte auch erheblich teuer sind.

Überspannungsschutzgeräte vom Typ I (gemäß DIN EN 61643-11; früher B-Ableiter gemäß DIN VDE 0675 Teil 6) sollen verwendet werden, wenn hohe Blitzströme einkoppeln können.

Durch Überspannungsschutzgeräte Typ I kann im Moment des Blitzeinschlages der Potenzialausgleich zwischen dem PE Außenleiter sowie dem Neutralleiter hergestellt werden. Diese Überspannungsschutzgeräte vom Typ I werden im Hauptstromversorgungssystem eingesetzt. Dadurch soll sichergestellt werden, dass der Blitzstrom nicht in die Gebäudeinstallation fließen kann. Überspannungsschutzgeräte Typ I sollen unterhalb der für die Betriebsmittel in der Einspeisung zulässigen Bemessungs-Stoßspannung (DIN VDE 0110 Teil 1 / November 2003) von 6 kV ansprechen
Überspannungsschutzgeräte vom Typ I können in der Regel nicht die gesamte Niederspannungsinstallation bis hin zu den Endgeräten schützen, da diese z.T. weit entfernt sind und eine niedrigere Bemessungs-Stoßspannung aufweisen. Diese Aufgabe übernehmen die Überspannungsschutzgeräte vom Typ II (Überspannungsschutzgerät Typ 2 gemäß DIN EN 61643-11; früher C-Ableiter gemäß DIN VDE 0675 Teil 6) und Typ III (Überspannungsschutzgerät Typ 3 gemäß DIN EN 61643-11; früher D-Ableiter gemäß DIN VDE 0675 Teil 6).

Da Überspannungsschutzgeräte vom Typ I sehr teuer sind, hat sich ein Trend entwickelt in nicht exponierten (Blitz-) Lagen auf teure Typ I-Ableiter zugunsten deutlich preiswerter Typ II Ableiter zu verzichten.

Typ II Ableiter werden hauptsächlich auf Basis leistungsstarker Varistorkeramik-Scheiben "B40" (Kantenlänge ca. 40 mm X 40 mm) realisiert. Diese haben ein Nennableitvermögen Iₙₑₙₙ von ca. 20 kA der Impulsform 8/20 µs. Wesentlich höhere Belastungen führen zur Zerstörung der Ableiter.

Die leistungsmäßige Beschränkung des Überspannungsschutzes auf Typ 2- Ableiter hat jedoch den Nachteil, dass Direkt- oder Naheinschläge zu Impulsströmen führen, die das Leistungsvermögen des Typ II-Ableiters im Hinblick auf die Stoßstromamplitude als auch die Impulslänge weit überlasten und diesen zerstören.

Während Typ II-Ableiter mit Sicherungsmechanismen gegen übermäßige Erwärmung und Alterung ausgestattet sind, führt die impulsartige Überlastung (wenige Millisekunden) häufig zu einer völligen Zerstörung des Ableiters.

Ursache hierfür ist, dass die entsprechende(n) Ableitervorsicherung(en) bei größeren Impulsströmen zwar auslösen und somit nachfolgende Netzströme durch überlastete Ableiter unterbinden, der Impulsstrom selbst aber nicht gestoppt wird, so dass der Ableiter ungebremst überlastet werden kann.

Weiterhin basieren die Sicherheitsmechanismen des Ableiters im Wesentlichen auf thermisch aktivierten Mechanismen, die auf Grund der eigenen thermischen Trägheit frühestens nach 100 ms auslösen.

Somit besteht kein wirksamer Schutz gegen Überspannungsereignisse, überhöhter Amplituden und längerer Dauer, z.B. Langwellenstößen als Folge von Ferneinschlägen.

Weitere Folge hiervon sind - neben der impulsartigen Zerstörung des herkömmlichen Typ II-Ableiters - unmittelbare Schäden in der Umgebung des betroffenen Ableiters in Form von mechanischer Zerstörung, Metalldampf und rußartiger Verschmutzung, sowie sekundäre Schäden durch offene Lichtbögen und deren Folgeerscheinungen, wie z.B. Entflammung von Materialien im Einwirkbereich.

### Aufgabe der Erfindung

Es wäre daher wünschenswert ein kostengünstiges Überspannungsschutzgerät vom Typ II zur Verfügung stellen zu können, das auch bei Einwirkung eines Überspannungsereignisses entsprechend einem Blitz diesen gefahrlos ableiten könnte.

### Kurzdarstellung der Erfindung

Die Aufgabe wird gelöst durch ein Überspannungsschutzgerät vom Typ II, aufweisend einen Varistor und ein Schutzelement, wobei das Schutzelement einen ersten Anschluss zur Verbindung mit einem ersten Potential eines Versorgungsnetzes aufweist und einen zweiten Anschluss, der mit einem ersten Anschluss des Varistors verbunden ist, aufweist, wobei der Varistor weiterhin einen zweiten Anschluss zur Verbindung mit einem zweiten Potential eines Versorgungsnetzes aufweist, wobei das Schutzelement einen Schmelzleiter aufweist, der den ersten Anschluss und den zweiten Anschluss des Schutzelements verbindet, wobei das Schutzelement weiterhin einen dritten Anschluss aufweist, der mit dem zweiten Anschluss des Varistors verbunden ist und der benachbart, aber elektrisch isoliert zum Schmelzleiter angeordnet ist, wobei der Schmelzleiter im Bereich des benachbarten Anschlusses eine Engstelle aufweist, wobei die Engstelle so ausgestaltet ist, dass der Schmelzleiter im Bereich der Engstelle ein elektrisch leitendes Schmelzmittel aufweist, wobei das Schmelzmittel einen geringeren Erweichungspunkt als der Schmelzleiter selbst aufweist, so dass Impulse, die einer Belastung unterhalb der Auslegung als Typ II entsprechen, nicht zu einer nachhaltigen Veränderung der Engestelle führen, wobei die Engstelle in Verbindung mit dem Schmelzmittel so dimensioniert ist, dass Impulse, die einer Belastung im Grenzbereich der Auslegung als Typ II entsprechen, zu einem Eindiffundieren des Schmelzmittels in den Schmelzleiter führen.

Weitere vorteilhafte Ausgestaltungen der Erfindung sind in den Unteransprüchen und der Beschreibung angegeben.

### Kurzdarstellung der Zeichnungen

Nachfolgend wird die Erfindung unter Bezugnahme auf die anliegende Zeichnung anhand bevorzugter Ausführungsformen näher erläutert.

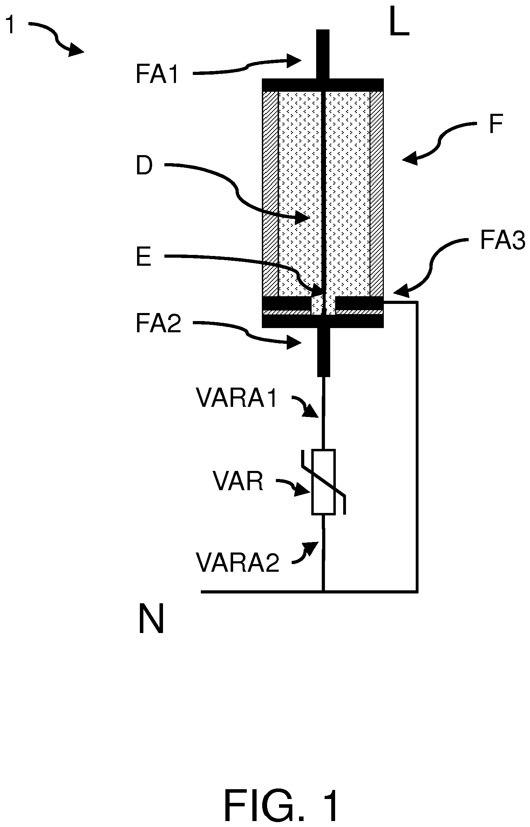

Es zeigt
- Fig. 1: ein erfindungsgemäßes Überspannungsschutzgerät in einer schematischen Darstellung,
- Fig. 2a: einen Aspekt der Erfindung,
- Fig. 2b.: eine weiteren Aspekt der Erfindung,
- Fig. 3: eine weitere Ausgestaltung eines erfindungsgemäßen Überspannungsschutzgerätes in einer schematischen Darstellung,
- Fig. 4a-d: je eine weitere Ausgestaltung eines erfindungsgemäßen Überspannungsschutzgerätes in einer schematischen Darstellung,
- Fig. 5: einen beispielhaften Stromfluss in Bezug auf das erfindungsgemäße Überspannungsschutzgerät in einem ersten nicht-betriebsfähigem und an ein Betriebsnetz angeschlossenem Zustand des Überspannungsschutzgerätes, und
- Fig. 6: einen beispielhaften Aufbau von Kontakten und Schmelzleitern gemäß Ausführungsformen der Erfindung.

### Ausführliche Beschreibung

Nachfolgend wird die Erfindung eingehender unter Bezugnahme auf die Figur dargestellt werden. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden soweit nicht explizit als reine Alternative dargestellt.

Weiterhin wird nachfolgend der Einfachheit halber in aller Regel immer nur auf eine Entität Bezug genommen werden. Soweit nicht explizit vermerkt, kann die Erfindung aber auch jeweils mehrere der betroffenen Entitäten aufweisen. Insofern ist die Verwendung der Wörter "ein", "eine" und "eines" nur als Hinweis darauf zu verstehen, dass in einer einfachen Ausführungsform zumindest eine Entität verwendet wird.

Obwohl im folgenden Bezug auf Phasen N, L eines Wechselspannungsnetzes genommen wird, ist die Erfindung nicht hierauf beschränkt, sondern kann in jeglicher Ausgestaltung eines elektrischen Versorgungsnetzes - sei es ein Gleichspannungsnetz, ein Einphasen- oder Mehrphasen- Wechselspannungsnetz - Verwendung finden.

In allgemeinster Form weist ein erfindungsgemäßes Überspannungsschutzgerät 1 vom Typ II zumindest einen Varistor VAR und ein Schutzelement F auf. Zum besseren Verständnis sind nachfolgend Anschlüsse an diesen Elementen beschrieben. Das Schutzelement F weist einen ersten Anschluss FA1 zur Verbindung mit einem ersten Potential L eines Versorgungsnetzes und einen zweiten Anschluss FA2 auf, der mit einem ersten Anschluss VARA1 des Varistors VAR verbunden ist.

Der Varistor VAR weist weiterhin einen zweiten Anschluss VARA2 zur Verbindung mit einem zweiten Potential N eines Versorgungsnetzes auf.

Das Schutzelement F weist zumindest einen Schmelzleiter D auf, der den ersten Anschluss FA1 und den zweiten Anschluss FA2 des Schutzelements F verbindet.

Weiterhin weist das Schutzelement F einen dritten Anschluss FA3 auf, der mit dem zweiten Anschluss VARA2 des Varistors VAR verbunden ist und der benachbart, aber elektrisch isoliert zum Schmelzleiter D angeordnet ist.

Die Bedeutung der Nachbarschaft wird später eingehender erläutert werden.

Der Schmelzleiter D weist im Bereich des benachbarten Anschlusses FA3 eine Engstelle E auf, wobei die Engstelle E so ausgestaltet ist, dass der Schmelzleiter D im Bereich der Engstelle E ein elektrisch leitendes Schmelzmittel SM aufweist, wobei das Schmelzmittel SM einen geringeren Erweichungspunkt als der Schmelzleiter D selbst aufweist, so dass Impulse, die einer Belastung unterhalb der Auslegung als Typ II entsprechen, nicht zu einer nachhaltigen Veränderung der Engstelle E führen, wobei die Engstelle E in Verbindung mit dem Schmelzmittel SM so dimensioniert ist, dass Impulse, die einer Belastung im Grenzbereich der Auslegung als Typ II entsprechen, zu einem Eindiffundieren des Schmelzmittels SM in den Schmelzleiter D führen, wobei Impulse, die einer Belastung stärker und/oder langanhaltender als der Auslegung als Typ II des Varistors VAR entsprechen, zu einem unmittelbaren Abtrennen des Schmelzleiters D führen.

Dadurch, dass die Engstelle E in Verbindung mit dem Schmelzmittel SM so dimensioniert ist, dass Impulse, die einer Belastung im Grenzbereich der Auslegung als Typ II entsprechen, zu einem Eindiffundieren des Schmelzmittels SM in den Schmelzleiter D führen, wird sichergestellt, dass die Engstelle E immer schneller altert als der Varistor VAR selbst.

Bevorzugt ist das Schutzelement F in einem druckfesten und/oder isolierenden Gehäuse angeordnet.

Wesentlich ist jedoch die energetische Abstimmung und Ausgestaltung der Engstelle E des Schmelzleiters D in Hinblick auf die Leistungsfähigkeit der abzusichernden Varistors VAR.

In dieser ersten Ausführung des Systems ist die Engstelle E des Schmelzleiters D so dimensioniert, dass die Engstelle E nur I²t-Werte von Impulsgrößen unverändert tragen kann, die nicht zu einer relevanten Alterung des nachgeschalteten Varistor VAR führen. Größere Überspannungsimpulse hingegen führen zur Veränderung der Engstelle. Dabei sind zwei Fälle zu unterscheiden.

I²t-Kennlinien bzw. I²t-Werte stehen für die Wärmewirkung des Stromes, welche die Sicherung auslöst. I²t-Werte sind echte physikalische Sicherungsdaten, die von der Sicherungskonstruktion abhängen.

Im ersten Fall ist die Überlastung so groß, dass die Engstelle E thermisch so überlastet wird, dass der Schmelzleiter an der Engstelle E schmilzt und ein Lichtbogen entsteht, der wiederum auf den dritten zugeführten Kontakt FA3 in der Nachbarschaft der Engstelle E kommutiert, so dass der überlastete Varistor VAR stromtechnisch entlastet wird, und der Hauptschmelzleiter D der Sicherung auslöst, den Strom löscht und den Varistor VAR vom Netz getrennt hat. Somit wird der Varistor VAR vom Löschintegral des Schutzelementes F entlastet und schlussendlich sicher isoliert vom Netz getrennt.

Im zweiten Fall der Überlastung bewegt sich die Höhe der Überlastung des Varistors VAR in einem Bereich, in dem der Varistor VAR zwar nicht direkt zerstört wird, jedoch eine Änderung seiner elektrischen Eigenschaften zu erwarten ist. Solche Überlastungen führen zur Änderung von Kenn- und Leistungsdaten des Varistors VAR, so dass nachfolgende Ableitungen zur Überlastung führen können, oder z. B. die Isolationsfähigkeit des Varistors VAR nachlässt. Diese Prozesse werden für Varistoren VAR unter dem Begriff der Alterung subsumiert. Um die Alterung des Varistors VAR sicherheitstechnisch abfangen zu können, sind zusätzliche Maßnahmen notwendig.

Hierzu weist der Schmelzleiter D im Bereich der Engstelle ein elektrisch leitendes Schmelzmittel SM auf. Das elektrisch leitende Schmelzmittel SM diffundiert bei Erwärmung in den Schmelzeiter ein und reduziert dessen Leitfähigkeit. Da das elektrisch leitende Schmelzmittel SM im Bereich der Engstelle angeordnet ist, ist hier auf Grund der Tatsache, dass hier nun ein höherer elektrische Widerstand vorliegt, mit einer entsprechend schnelleren Erwärmung zu rechnen.

Diese Technik erlaubt ein verbessertes Auslösen des Schutzelementes F. Durch geeignete Dimensionierung, Materialwahl und Geometrie der Engstelle sowie eine gezielte Beeinflussung der Einwirkdauer der Temperatur kann der Alterungsprozess der Engstelle E im Verhältnis zur Alterung des Varistors VAR durch abgeleitete Überspannungen so eingestellt werden, dass die Impulstragfähigkeit der Engstelle E immer unterhalb der Rest-Impulstragfähigkeit des Varistors VAR liegt. Somit führen Impulsereignisse, die über dem "Restableitvermögen" des Varistors liegen, immer zur Auslösung des Schutzelementes F und einer Entlastung des Varistors VAR vom Ausschaltintegral der Sicherung.

Somit wird ein Überspannungsschutzgerät vom Typ II bereitgestellt, das ohne Zerstörung einem einmaligen, weil sehr selten auftretendem hochenergetischen Impuls standhalten kann, ohne dass es zu jedweder Zerstörung außerhalb des Varistors VAR kommt. Da ein solches Gerät einmalig der Leistungsklasse I entspricht, kann man von einem Typ 2-Ableiter mit Typ 1-Back-up sprechen.

Dabei wird der nachfolgende Ausfall des Überspannungsschutzgerätes bewusst in Kauf genommen, um ein sicheres und zugleich kostengünstiges Überspannungsschutzgerät zur Verfügung zu stellen.

Das erfindungsgemäße Überspannungsschutzgerät erfüllt zwar nicht die Anforderung an marktüblichen Typ I Ableitern hinsichtlich einer "vielfachen Ableitung", jedoch ist es diesen im Bereich einer einmaligen Maximalbelastung ebenbürtig und entsprechend sicher.

Somit wird ein praxisgerechtes Überspannungsschutzgerät bereitgestellt, dass für nicht exponierte elektrische Anlagen den üblichen dauerhaften Überspannungsschutz des Typ II zur Verfügung stellt, diese gegen Impulsüberlastung sichert und gleichzeitig einen einmaligen Anlagenschutz gegenüber Blitzstoßstromereignissen garantiert.

Dabei bleibt die Anlagenverfügbarkeit auch im Fall des Ansprechens des erfindungsgemäßen Überspannungsschutzgerätes erhalten, da vorgeschaltete Sicherungselemente im Hauptstrompfad nicht zerstört werden.

Ein solches erfindungsgemäßes Überspannungsschutzgerät kann als sicherer Basis-Überspannungsschutz für die Breitenanwendung betrachtet werden.

In einer vorteilhaften Ausgestaltung sind die Engstelle E und das Schmelzmittel SM bei Ableitung eines Impulses entsprechend eines Typ I Impulsereignisses so gestaltet, das die Engstelle E unmittelbar auftrennt und der entstehende Lichtbogen auf den dritten Anschluss FA3 kommutiert.

Hierdurch wird der Varistor VAR sofort energetisch entlastet. Das Schutzelement F ist hinsichtlich seines Energie-Absorptionsvermögens so dimensioniert, dass die Ableitung eines Impulsereignisses entsprechend eines Typ I-Ableiters EINMALIG möglich ist. D.h. ein hochenergetisches Ereignis, wie z.B. ein Blitzeinschlag kann einmalig abgeleitet werden.

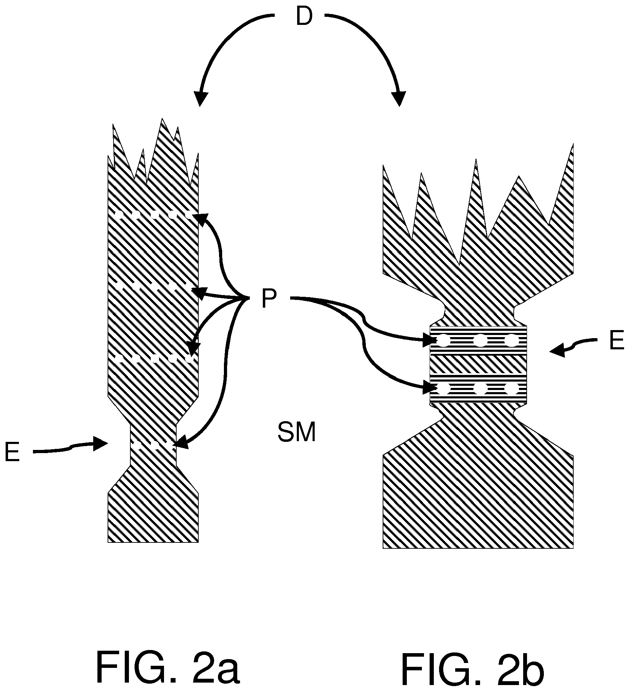

In einer vorteilhaften Ausgestaltung, welche in den Figuren 2a und 2b gezeigt ist, weist der Schmelzleiter zumindest im Bereich der Engstellte E - wie in Fig. 2a gezeigt - eine Perforation (oder Perforationsreihe) P oder - wie in Figur 2b gezeigt - mehrere Perforationen P (oder Perforationsreihen) P auf. Natürlich können auch an anderen Stellen auf dem Schmelzeiter D entsprechende Perforationen angeordnet sein, wie z.B. aus Figur 2a ersichtlich. Dabei ist die Struktur der Perforation P nur beispielhaft kreisförmig. Sie kann auch andere Ausformungen annehmen.

Besonders vorteilhaft kann die Engestelle E eine Perforation aufweisen, in der das Schmelzmittel SM befindlich ist. Hierdurch kann der Prozess des Eindiffundierens in den Schmelzleiter D beschleunigt werden. Das Eindiffundieren führt zu einer Veränderung des elektrischen Widerstandes (Erhöhung), sodass der Wärmeumsatz lokal ansteigt und eine baldige Abtrennung begünstigt.

In einer weiteren Ausgestaltung der Erfindung kann zusätzlich vorgesehen sein, dass das Sicherungselement F weiterhin einen vierten Anschluss FA4 aufweist, der über einen thermisch aktivierbaren Schalter S mit dem zweiten Anschluss VARA2 des Varistors VAR verbunden ist und der benachbart zum Schmelzleiter D angeordnet ist, wobei der thermisch aktivierbare Schalter S thermisch an den Varistor VAR angebunden ist.

In den Figuren ist die Nachbarschaftsbeziehung dieses vierten Anschlusses FA4 durch einen Pfeil verdeutlicht. Hier können unterschiedliche Mechanismen zum Einsatz kommen. Beispielsweise ist es möglich den vierten Anschluss FA4 elektrisch isoliert zum Schmelzleiter D auszuführen. Alternativ ist es aber auch möglich, dass hier zur besseren Zündung eine geringe Leitfähigkeit zwischen dem vierten Anschluss FA4 und dem Schmelzleiter D vorhanden ist oder aber auch, dass ein (nichtdargestellter) Hilfsschmelzleiter zwischen dem vierten Anschluss FA4 und dem ersten Anschluss FA1 vorgesehen ist.

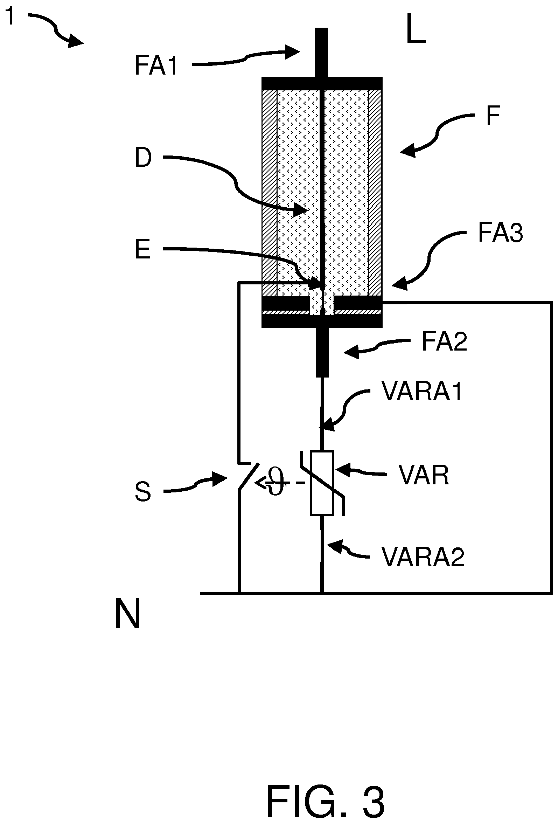

D.h. in der Ausführungsform der Fig. 3 kann z.B. auch eine anderweitige Alterung des Varistors VAR erkannt werden, denn es sind Fälle bekannt, in denen der Varistor VAR hinsichtlich seiner Isolation so geschädigt / gealtert ist, dass Leckströme fließen, die zu einer dauerhaften Erwärmung des Varistors VAR führen. Der dabei fließende Strom kann im Bereich weniger bis einiger 10 Milliampere liegen und würde häufig unentdeckt bleiben.

Herkömmliche Varistorableiter werden dafür mit Abtrennvorrichtungen ausgestattet, die einen elektrischen Kontakt zum Varistor über eine federvorgespannte Lötstelle herstellen. Bei Überlastung oder unzulässiger dauerhafter Erwärmung steigt die Temperatur des Varistors so weit, dass die Lötstelle erweicht und die Federvorspannung den elektrischen Kontakt unterbricht.

Diese Systeme sind hinsichtlich der sicheren Funktion über einen breiteren Strombereich stark eingeschränkt. Zum einen muss die Kontaktstelle nämlich so robust ausgeführt sein, dass sie den magnetischen Kräften und der Erwärmung bei bestimmungsgemäßer Ableittätigkeit standhält, zum anderen muss das System thermisch so sensitiv sein, dass die thermische Abtrennung rechtzeitig erfolgt, bevor ein Varistor durchlegiert und hohe Kurschlussströme fließen. Dieser Zielkonflikt ist in der Regel nur in eingeschränkten Grenzen zu beherrschen.

Weitere Einschränkungen ergeben sich für diese Systeme aus der einfachen mechanischen Ausführung zweier sich trennender Kontakte. Diese Systeme haben üblicher Weise ein stark eingeschränktes Schaltvermögen, so dass größere Ströme nicht mehr abgeschaltet werden können, sondern ein stehender Lichtbogen entsteht, der zur (äußeren) Zerstörung des Varistors führen kann.

Daher wird, wie in Fig. 3 gezeigt, ein thermisch sensitiver Schalter S, z.B. ein Bimetallschalter (Schließer), vorgeschlagen, der bei Erreichen einer maximal zulässigen Temperatur das Neutralleiterpotential N auf den vierten Anschluss FA4 schaltete, so dass es zu einem ersten Lichtbogen zwischen Schmelzleiter D und vierten Anschluss FA4 kommt, der den Hauptlichtbogen zwischen Schmelzleiter D und Neutralleiterkontakt zündet und in der Folge den Schmelzleiter D schädigt, so dass es zur vollständigen Auslösung des Schutzelements F kommt. Hierdurch ist der defekte Varistor VAR sicher von Netz getrennt und isoliert.

Natürlich kann der thermisch sensitive Schalter S auch mittels thermisch nicht-linearer Widerstände oder dergleichen aufgebaut sein und insofern sind dem Fachmann bei der Ausgestaltung keine Grenzen gesetzt.

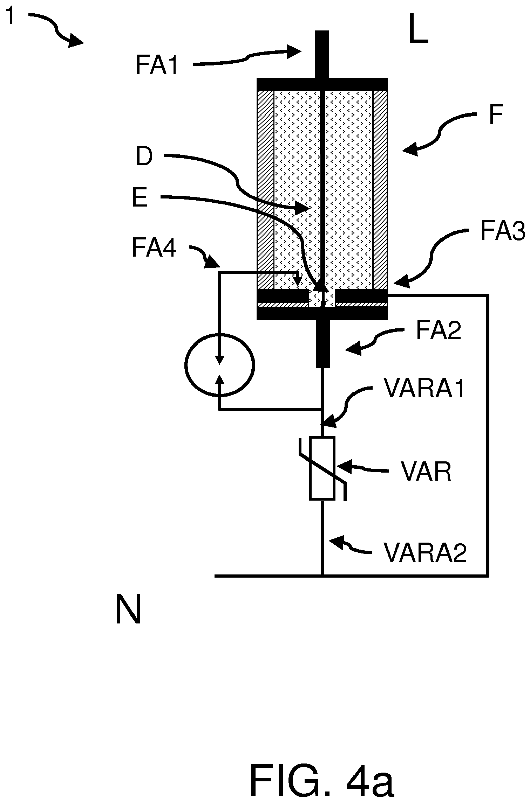

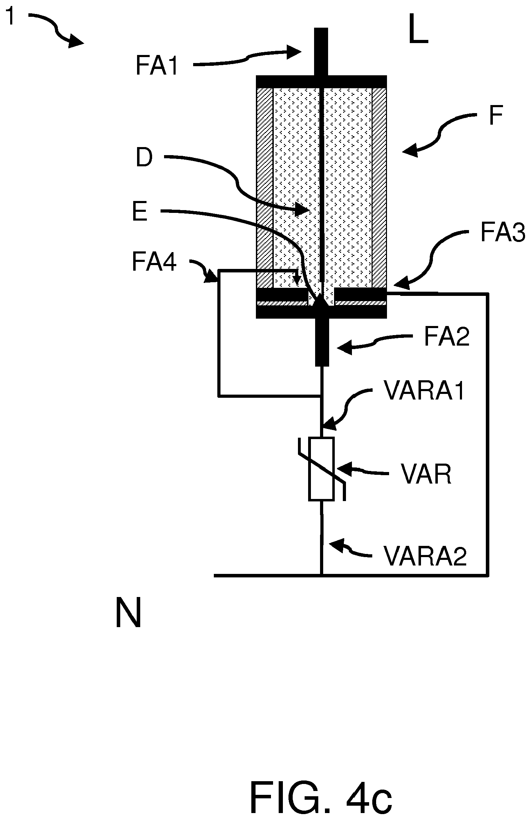

In den weiteren in den Figuren 4a-c dargestellten Ausführungsformen kann alternativ oder zusätzlich zu den bisherigen Ausführungsformen zudem vorgesehen sein, dass das Sicherungselement F einen vierten Anschluss FA4 aufweist, der mit dem ersten Anschluss VARA1 des Varistors VAR verbunden ist und der benachbart zum Schmelzleiter D und der benachbart, aber elektrisch isoliert, zum dritten Anschluss FA3 angeordnet ist.

Mit diesen Varianten wird es ermöglicht die Spannung am Varistor VAT als Steuerungsmittel zu verwenden, so dass ein (dynamischer) Überstrom das Sicherungselement - wie zuvor bereits beschrieben - zum Schalten veranlasst. Diese Art der Überlasterkennung detektiert die Spannung, die über den Varistor VAT abfällt. Bei Varistoren existiert eine eindeutige und stetige steigende Verknüpfung der Spannung mit dem fließenden Strom, auch wenn die entsprechende Kennlinie stark nichtlinear ist. Daher ist aus der Kennlinie heraus erkennbar, wann der maximal zulässige (dynamische) Strom für den entsprechenden Varistortyp überschritten ist. Das entsprechend detektierte Signal kann zur Zündung der getriggerten Sicherung genutzt werden.

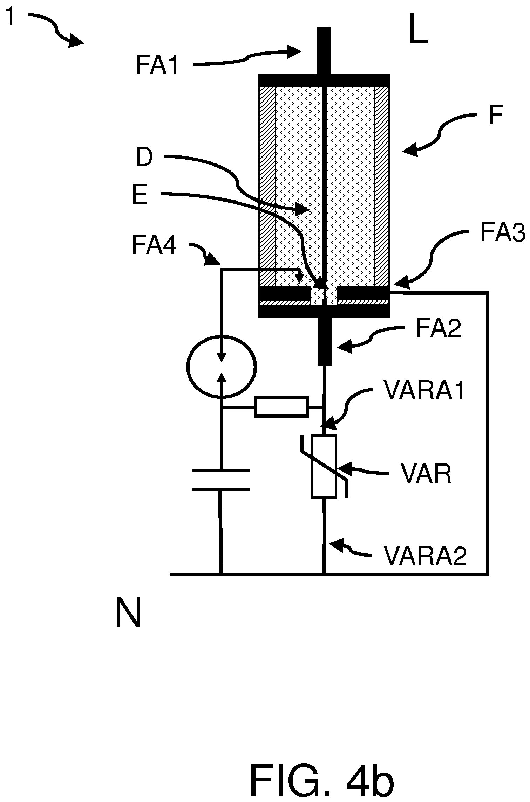

In der Ausführungsform der Figur 4a und 4b ist zwischen dem vierten Anschluss FA4 des Sicherungselementes F und dem ersten Anschluss VARA1 des Varistors VAR ein überspannungssensitives Element TVS angeordnet.

Die in Fig. 4a dargestellte Schaltung offenbart als spannungsdetektierendes Element TVS, das zugleich auch ein schaltendes Element ist, einen ÜSAG. Durch das Zünden des ÜSAG wird das Schutzelement F über den vierten Anschluss getriggert und ausgelöst. Diese Art des Schutzes des Varistors VAR vor Überlastung greift dann, wenn sehr schnelle Überlastungsvorgänge durch Impulsströme mit sehr schnellen Stirnzeiten auftreten.

Diese Art der Überlastungen kann durch thermische Überwachungsmechanismen in aller Regel nicht rechtzeitig detektiert werden.

Dabei kann das überspannungssensitive Elemente TVS beispielsweise durch eine Funkenstrecke, eine Transient Voltage Supressor Diode, einen gasgefüllten Überspannungsableiter ÜSAG, einen anderer Varistor (mit unterschiedlicher Kennlinie) oder dergleichen realisiert sein.

Ohne weiteres kann zusätzlich vorgesehen sein, dass zusätzlich zum überspannungssensitiven Element TVS tiefpassbildende Elemente bereitgestellt sind. Diese können durch geeignete Beschaltung mittels Widerständen und/oder Kondensatoren und/oder Spulen bereitgestellt werden.

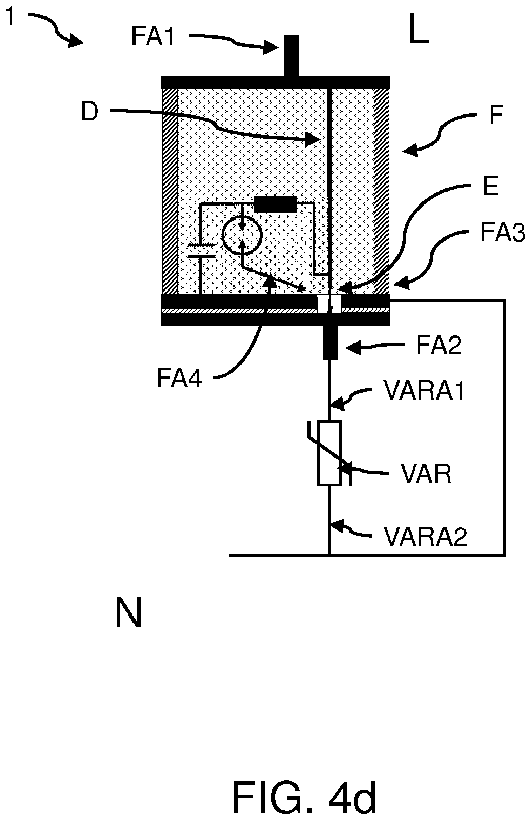

Alternativ oder zusätzlich kann aber auch die Spannung am Schmelzleiter D (wie in Figur 4d gezeigt) als Steuerungsmittel Verwendung finden.

Beispielsweise ist in der Figur 4d innerhalb des Sicherungselementes F ein überspannungssensitives Element TVS angeordnet, wobei das überspannungssensitive Element TVS auf einer Seite elektrisch mit dem Schmelzleiter zwischen dem ersten Anschluss FA1 und der Engstelle E verbunden ist und wobei die andere Seite des überspannungssensitiven Elementes TVS benachbart zum Schmelzleiter D und benachbart, aber elektrisch isoliert zum dritten Anschluss FA3, angeordnet ist.

Dabei kann das überspannungssensitive Elemente TVS beispielsweise durch eine Funkenstrecke, eine Transient Voltage Supressor Diode, einen gasgefüllten Überspannungsableiter ÜSAG, einen anderer Varistor (mit unterschiedlicher Kennlinie) oder dergleichen realisiert sein.

Ohne weiteres kann zusätzlich vorgesehen sein, dass zusätzlich zum überspannungssensitiven Element TVS tiefpassbildende Elemente bereitgestellt sind. Diese können durch geeignete Beschaltung mittels Widerständen und/oder Kondensatoren und/oder Spulen bereitgestellt werden.

Dabei kann das überspannungssensitive Element TVS sowohl in einem eigenen druckfesten Gehäuse (nicht dargestellt) angeordnet sein, um Schäden bei einer eventuellen Zerstörung zu verhindern oder zu minimieren, oder aber das überspannungssensitive Element TVS ist - wie in Figur 4d dargestellt - ebenfalls im druckfesten Gehäuse des Sicherungselementes F angeordnet.

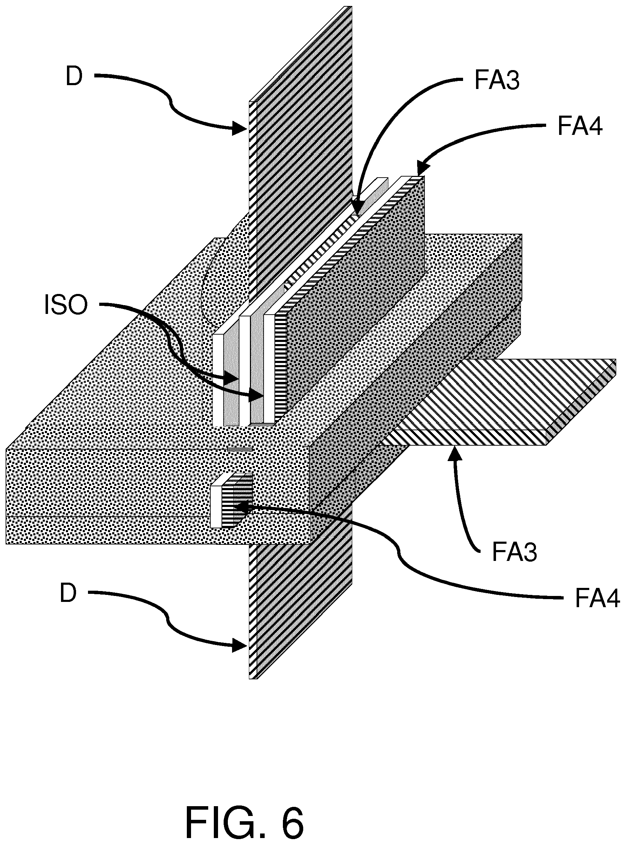

In den unterschiedlichen Ausführungsformen kann zudem vorgesehen sein, dass der Schmelzleiter D und der dritte Anschluss FA3 des Sicherungselementes F im Normal-Betriebszustand elektrisch durch ein isolierendes Material ISO getrennt sind, wobei der dritte Anschluss und das isolierende Material ISO so angeordnet sind, dass ein Zünden benachbart zum isolierenden Material ISO zu einer zumindest oberflächlichen Degradierung des isolierenden Materials ISO führt, dergestalt, dass die Oberfläche ihre isolierende Eigenschaft verliert und einen Stromfluss zwischen dem Schmelzleiter D und dem dritten Anschluss FA3 zulässt. Eine solche Ausführungsform ist in Figur 6 gezeigt. Dabei ist der Schmelzeiter D (dargestellt mit Längsschraffur) ohne Engstelle E dargestellt. Der Schmelzleiter D ist von dem dritten Anschluss FA 3 (dargestellt mit Schrägschraffur) durch ein isolierendes Material ISO (dargestellt als weiße Schicht) getrennt. Weiterhin kann noch ein vierter Anschluss FA4 (dargestellt mit Querschraffur) optional vorgesehen sein, wobei der dritte Kontakt und der vierte Kontakt FA4 wiederum durch ein (gleiches oder andersartiges) isolierende Material ISO getrennt sein können. Wird ein vierter Kontakt FA4 zusätzlich zum dritten Kontakt FA3 zur Verfügung gestellt, kann die Abfolge auch anders gewählt sein, d.h. auch der vierte Kontakt FA4 kann benachbart zum Schmelzleiter D angeordnet sein. Die unterschiedlichen Kontakte FA3, FA4 und der Schmelzleiter D können beispielsweise aus dünnen Metallfolien oder Platten hergestellt sein. Die unterschiedlichen Elemente können in einer isolierenden Einfassung (gepunktet dargestellt) eingebunden sein.

Dabei tritt im Falle einer Triggerung mittels des dritten Anschlusses FA3 oder des vierten Anschlusses FA4 (soweit vorhanden) ein Lichtbogen zum Schmelzleiter D hin auf, der das in der Nachbarschaft befindliche isolierende Material ISO (zwischen D und FA3) beschädigt, so dass dieses nun auf Grund seines geringen CTI-Wertes (CTI Wert von FR4 z.B. circa 150 V) und der durch den Lichtbogen erzeugten (lokalen oberflächlichen) Degradierung (beispielsweise Verrußung, Verkohlung) nun dazu führt, dass ein (kleiner) Lichtbogen weiter aufrecht erhalten wird (bzw. bei einem Wechselspannungsbetrieb auch nach einem Nulldurchgang der Phase wieder erneut zündet), der sich quasi von der Entstehungsstelle fort entlang der Grenzfläche (in beide Richtungen) frisst, so dass am Ende der Schmelzleiter D aufgetrennt wird.

Dabei kann das isolierende Material ISO einen Kunststoff bzw. ein Verbundmaterial mit niedrigem CTI-Wert, beispielsweise Phenolharz (PF-Harze), Polyetheretherketon (PEEK), Polyimid (PI), Epoxydharzgefüllte Glasfaserverbundwerkstoffe, wie z.B. FR4 oder dergleichen aufweisen. CTI-Werte - auch als Kriechstromfestigkeit bekannt - werden z.B. nach IEC 60112 ermittelt. Beispielhafte Werkstoffe sind der Isolierstoffgruppe IIIa und/oder Isolierstoffgruppe IIIb zugeordnet.

Weiterhin kann vorteilhaft vorgesehen sein, dass das Schutzelement F) zumindest im Bereich der Engstelle E eine Füllung aus Sand aufweist. Hierdurch kann die Wirkung von starken Lichtbögen wirksam gedämpft werden.

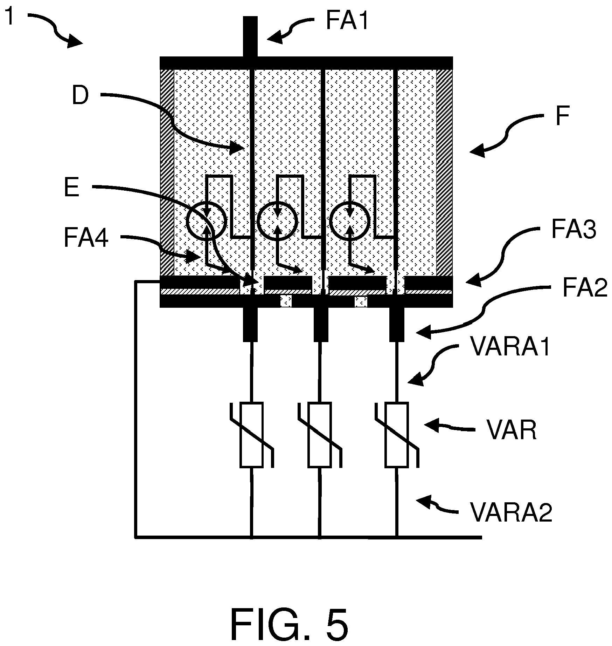

Natürlich kann - wie beispielhaft aus Figur 5 ersichtlich - die Erfindung auch für Mehrleitersysteme verwendet werden, wobei hier sowohl einzelne Überspannungsschutzgeräte für einzelne Phasen als auch ein Kombigerät (wie dargestellt) verwendet werden kann.

Das in Fig. 5 dargestellte Überspannungsschutzgerät hat daher den Vorteil, dass die Anordnung der Potentiale in einem Gehäuse nicht nur platzsparend ist, sondern das Auslösen eines Sicherungselementes F zum Auslösen aller Element führt. Der nachfolgende Überspannungsschutz wird also dreiphasig vom Netz getrennt.

Die erfindungsgemäßen Überspannungsschutzgeräte können ohne weiteres zur Montage auf einer Tragschiene geeignet sein und können zudem über geeignete lokale Fehlermeldungseinrichtung bzw. über geeignete Fernmeldeeinrichtungen verfügen, um ein Auslösen zu signalisieren.

**Bezugszeichenliste**

| | |
|---|---|
| Überspannungsschutzgerät | 1 |
| Varistor | VAR |
| Schutzelement | F |
| Varistor-Anschluss | VARA1, VARA2 |
| Schutzelement-Anschluss | FA1, FA2, FA3, FA4 |
| Potential | L, N |
| Schmelzleiter | D |
| Engstelle | E |
| Schmelzmittel | SM |
| überspannungssensitives Element | TVS |
| isolierenden Material | ISO |

## Patentansprüche

1. Überspannungsschutzgerät (1) vom Typ II,
• aufweisend einen Varistor (VAR) und ein Schutzelement (F),
• wobei das Schutzelement (F) einen ersten Anschluss (FA1) zur Verbindung mit einem ersten Potential (L) eines Versorgungsnetzes aufweist und einen zweiten Anschluss (FA2), der mit einem ersten Anschluss (VARA1) des Varistors (VAR) verbunden ist, aufweist,
• wobei der Varistor (VAR) weiterhin einen zweiten Anschluss (VARA2) zur Verbindung mit einem zweiten Potential (N) eines Versorgungsnetzes aufweist,
• wobei das Schutzelement (F) einen Schmelzleiter (D) aufweist, der den ersten Anschluss (FA1) und den zweiten Anschluss (FA2) des Schutzelements (F) verbindet,
• wobei das Schutzelement (F) weiterhin einen dritten Anschluss (FA3) aufweist, der mit dem zweiten Anschluss (VARA2) des Varistors (VAR) verbunden ist und der benachbart, aber elektrisch isoliert, zum Schmelzleiter (D) angeordnet ist,
• wobei der Schmelzleiter (D) im Bereich des benachbarten Anschlusses (FA3) eine Engstelle (E) aufweist, wobei die Engstelle so ausgestaltet ist, dass der Schmelzleiter (D) im Bereich der Engstelle (E) ein elektrisch leitendes Schmelzmittel (SM) aufweist,
• wobei das Schmelzmittel (SM) einen geringeren Erweichungspunkt als der Schmelzleiter (D) selbst aufweist, so dass Impulse, die einer Belastung unterhalb der Auslegung als Typ II entsprechen, nicht zu einer nachhaltigen Veränderung der Engstelle (E) führen,
• wobei die Engstelle (E) in Verbindung mit dem Schmelzmittel (SM) so dimensioniert ist, dass Impulse, die einer Belastung im Grenzbereich der Auslegung als Typ II entsprechen, zu einem Eindiffundieren des Schmelzmittels (SM) in den Schmelzleiter (D) führen,
• wobei Impulse, die einer Belastung stärker und/oder langanhaltender als der Auslegung als Typ II des Varistors (VAR) entsprechen, zu einem unmittelbaren Abtrennen des Schmelzleiters (D) führen.

2. Überspannungsschutzgerät (1) gemäß Anspruch 1, **dadurch gekennzeichnet, dass** die Engstelle (E) und das Schmelzmittel (SM) bei Ableitung eines Impulses entsprechend eines Typ I Impulsereignisses unmittelbar auftrennen und der entstehende Lichtbogen auf den dritten Anschluss FA3 kommutiert.

3. Überspannungsschutzgerät (1) gemäß Anspruch 1 oder 2, **dadurch gekennzeichnet, dass** die Engestelle (E) eine Perforation aufweist, in der das Schmelzmittel (SM) befindlich ist.

4. Überspannungsschutzgerät (1) gemäß einem der vorhergehenden Ansprüche, **dadurch gekennzeichnet, dass** das Sicherungselement (F) weiterhin einen vierten Anschluss (FA4) aufweist, der über einen thermisch aktivierbaren Schalter (S) mit dem zweiten Anschluss (VARA2) des Varistors (VAR) verbunden ist und benachbart zum Schmelzleiter (D) angeordnet ist, wobei der thermisch aktivierbare Schalter (S) thermisch an den Varistor (VAR) angebunden ist,

5. Überspannungsschutzgerät (1) gemäß einem der vorhergehenden Ansprüche 1 bis 3, **dadurch gekennzeichnet, dass** das Sicherungselement (F) weiterhin einen vierten Anschluss (FA4) aufweist, der mit dem ersten Anschluss (VARA1) des Varistors (VAR) verbunden ist und der benachbart zum Schmelzleiter (D) und der benachbart aber elektrisch isoliert zum dritten Anschluss (FA3) angeordnet ist.

6. Überspannungsschutzgerät (1) gemäß Anspruch 5, **dadurch gekennzeichnet, dass** zwischen dem vierten Anschluss (FA4) des Sicherungselementes (F) und dem ersten Anschluss (VARA1) des Varistors (VAR) ein überspannungssensitives Element (TVS) angeordnet ist.

7. Überspannungsschutzgerät (1) gemäß einem der vorhergehenden Ansprüche 1 bis 3, **dadurch gekennzeichnet, dass** innerhalb des Sicherungselementes (F) ein überspannungssensitives Element (TVS) angeordnet ist, wobei das überspannungssensitive Element (TVS) auf einer Seite elektrisch mit dem Schmelzleiter zwischen dem ersten Anschluss (FA1) und der Engstelle (E) verbunden ist und wobei die andere Seites des überspannungssensitive Element (TVS) benachbart zum Schmelzleiter (D) und benachbart, aber elektrisch isoliert zum dritten Anschluss (FA3), angeordnet ist.

8. Überspannungsschutzgerät (1) gemäß Anspruch 6 oder 7, **dadurch gekennzeichnet, dass** zusätzlich zum überspannungssensitiven Element (TVS) tiefpassbildende Elemente bereitgestellt sind.

9. Überspannungsschutzgerät (1) gemäß einem der vorhergehenden Ansprüche 6 bis 8, **dadurch gekennzeichnet, dass** das überspannungssensitive Element (TVS) in einem druckfesten Gehäuse angeordnet ist.

10. Überspannungsschutzgerät (1) gemäß einem der vorhergehenden Ansprüche, **dadurch gekennzeichnet, dass** der Schmelzleiter (D) und der dritte Anschluss des Sicherungselementes im Normal-Betriebszustand elektrisch durch ein isolierendes Material (ISO) getrennt sind, wobei der dritte Anschluss und das isolierende Material (ISO) so angeordnet sind, dass ein Zünden benachbart zum isolierenden Material (ISO) zu einer zumindest oberflächlichen Degradierung des isolierende Material (ISO) führt, dergestalt, dass die Oberfläche ihre isolierende Eigenschaft verliert und einen Stromfluss zwischen dem Schmelzleiter (D) und dem dritten Anschluss (FA3) zulässt.

11. Überspannungsschutzgerät gemäß Anspruch 10, **dadurch gekennzeichnet, dass** das isolierende Material (ISO) einen Kunststoff bzw. ein Verbundmaterial mit niedrigem CTI-Wert, beispielsweise Polyetheretherketon (PEEK), Polyimid (PI), Epoxydharzgefüllte Glasfaserverbundwerkstoffe, wie z.B. FR4 oder dergleichen aufweist.

12. Überspannungsschutzgerät (1) gemäß einem der vorhergehenden Ansprüche 1 bis 9, **dadurch gekennzeichnet, dass** das Schutzelement (F) zumindest im Bereich der Engstelle (E) eine Füllung aus Sand aufweist.

13. Überspannungsschutzgerät für Mehrleitersystem aufweisend mehrere Überspannungsschutzgerät nach einem der vorhergehenden Ansprüche.
